(19) Europäisches Patentamt / European Patent Office / Office européen des brevets

(11) **EP 4 173 842 B1**

(12) **EUROPEAN PATENT SPECIFICATION**

(45) Date of publication and mention of the grant of the patent:
**11.12.2024 Bulletin 2024/50**

(21) Application number: **22183668.7**

(22) Date of filing: **07.07.2022**

(51) International Patent Classification (IPC):
**B60C 1/00** *(2006.01)*     **B60C 11/00** *(2006.01)*

(52) Cooperative Patent Classification (CPC):
**B60C 1/0016; B60C 11/0041; B60C 11/005;**
B60C 2011/0016; B60C 2011/0025;
B60C 2011/0033; Y02T 10/86

(54) **HEAVY DUTY TIRE**

SCHWERLASTREIFEN

PNEU POIDS LOURD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2021 JP 2021174650**

(43) Date of publication of application:
**03.05.2023 Bulletin 2023/18**

(73) Proprietor: **Sumitomo Rubber Industries, Ltd.**
**Kobe-shi, Hyogo-ken 651-0072 (JP)**

(72) Inventors:
• **OSHIMO, Masaki**
  **Kobe-shi, 651-0072 (JP)**
• **HISAJIMA, Kento**
  **651-0072 Kobe-shi (IL)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 785 928**     **EP-A1- 3 960 492**
**JP-A- 2023 064 391**

**Description**

TECHNICAL FIELD

The present invention relates to a heavy duty tire.

BACKGROUND ART

Various methods have been proposed to improve chipping resistance of tires in heavy duty vehicles such as trucks and buses, see for instance EP 3 960 492 A1. In recent years, however, it has become desirable to improve chipping resistance during high-speed running. Also tires for vehicles other than heavy duty vehicles, methods have been proposed, see for instance EP 3 785 928 A1.

SUMMARY OF INVENTION

TECHNICAL PROBLEM

The present invention aims to solve the above problem and provide a heavy duty tire having excellent chipping resistance during high-speed running.

SOLUTION TO PROBLEM

The present invention relates to a heavy duty tire, including a tread portion,

the tread portion including a shoulder region located axially (with respect to the tire) outward from an axially outermost main longitudinal groove extending in a circumferential (with respect to the tire) direction,
the tread portion being provided with a tread rubber consisting of a multilayer structure including a cap rubber layer forming a tread outer surface and a radially (with respect to the tire) innermost base rubber layer,
the cap rubber layer in the shoulder region containing at least one rubber component including a polybutadiene rubber and a carbon black,
the heavy duty tire satisfying the following relationships (1) to (3):

$$(1) \quad Tb/Tc \leq 0.50;$$

$$(2) \quad Eb'/Ec' \leq 0.60;$$

and

$$(3) \quad Bca/(Tb/Tc) \geq 40$$

wherein Tc and Ec' denote a thickness and a complex modulus, respectively, of the cap rubber layer in the shoulder region; Tb and Eb' denote a thickness and a complex modulus, respectively, of the base rubber layer in the shoulder region; and Bca denotes a polybutadiene rubber content based on 100% by mass of a rubber component content in the cap rubber layer.

ADVANTAGEOUS EFFECTS OF INVENTION

The heavy duty tire of the present invention includes a tread portion in which the tread portion includes a shoulder region located axially outward from an axially outermost main longitudinal groove extending in the circumferential direction; the tread portion is provided with a tread rubber consisting of a multilayer structure including a cap rubber layer forming a tread outer surface and a radially innermost base rubber layer; the cap rubber layer in the shoulder region contains at least one rubber component including a polybutadiene rubber and a carbon black; and the heavy duty tire satisfies relationships (1) to (3). Thus, the heavy duty tire has excellent chipping resistance during high-speed running.

BRIEF DESCRIPTION OF DRAWINGS

FIG. 1 is a cross-sectional view of a working example of a heavy duty tire of the present invention.
FIG. 2 is an enlarged cross-sectional view of a tread portion thereof.

DESCRIPTION OF EMBODIMENTS

The heavy duty tire of the present invention includes a tread portion. The tread portion includes a shoulder region located axially (with respect to the tire) outward from an axially (with respect to the tire) outermost main longitudinal groove extending in the circumferential (with respect to the tire) direction. The tread portion is provided with a tread rubber consisting of a multilayer structure including a cap rubber layer forming a tread outer surface and a radially (with respect to the tire) innermost base rubber layer. The cap rubber layer in the shoulder region contains at least one rubber component including a polybutadiene rubber and a carbon black. The heavy duty tire satisfies relationships (1) to (3).

The heavy duty tire provides the above-mentioned effect. The reason for this advantageous effect is believed to be as follows.

It is known that when a cap rubber layer/base rubber layer structure including a base rubber layer excellent in low heat build-up properties is used in a tread portion, the shoulder region of the tread portion exhibits reduced heat build-up, resulting in improved fuel economy. However, due to presence of the interface within the tread portion, chipping of the tread portion may occur when an input is applied from the road surface aggregates. Particularly during running at high speeds when a higher input is transmitted to the tread portion, the tendency for such chipping may be significant.

In contrast, according to the present invention, it is considered that since the thickness of the base rubber layer, $Tb$, is adjusted to be not more than half the thickness of the cap rubber layer, $Tc$, in the shoulder region; specifically, the ratio of $Tb$ to $Tc$ is adjusted to satisfy the relationship (1): $Tb/Tc \leq 0.50$, the thickness of the cap rubber layer in the shoulder region is sufficiently ensured, and when hit by the aggregates, the cap rubber layer can deform so that the input from the road surface can be easily released. In addition, it is considered that the interface between the rubber layers can be kept away from the road surface to reduce the load on the interface.

Further, it is considered that since the complex modulus of the base rubber layer, $Eb'$, is adjusted to be smaller than the complex modulus of the cap rubber layer, $Ec'$, in the shoulder region; specifically, the ratio of $Eb'$ to $Ec'$ is adjusted to satisfy the relationship (2): $Eb'/Ec' \leq 0.60$, the base rubber layer can also easily deform so that stress concentration at the interface can be reduced. It is also considered that the cap rubber layer can also be deformed from the radially inner side of the tire, so that the occurrence of stress concentration at the tread surface can be prevented.

At the same time, it is considered that since the polybutadiene rubber content of the cap rubber layer, $Bca$, is adjusted to be higher than the ratio of the thickness of the base rubber layer ($Tb$) to the thickness of the cap rubber layer ($Tc$), $Tb/Tc$, in the shoulder region; specifically, $Bca$ and $Tb/Tc$ are adjusted to satisfy the relationship (3): $Bca/(Tb/Tc) \geq 40$, even when the cap rubber layer is relatively thin within the range of $Tb/Tc \leq 0.50$, chipping resistance is improved by the increase in the amount of flexibly movable polybutadiene rubbers.

It is believed that for this reason, it is possible for the heavy duty tire to have improved chipping resistance in the shoulder region during high-speed running.

Embodiments of the heavy duty tire of the present invention will be described below with reference to an example shown in the figures.

Herein, the term "heavy duty tire" refers to a tire with a maximum load capacity of 1400 kg or higher. Here, the term "maximum load capacity" refers to a maximum load capacity specified for each tire by the standard in a standard system including standards according to which tires are provided, and may be, for example, the maximum load capacity based on the load index (LI) in the Japan Automobile Tyre Manufacturers Association standard (JATMA standard), the maximum value shown in Table "TIRE LOAD LIMITS AT VARIOUS COLD INFLATION PRESSURES" in TRA, or the "load capacity" in ETRTO.

Herein, the dimensions and other characteristics of the tire components of the tire are determined in a normal state where the tire is mounted on a normal rim and inflated to a normal internal pressure, unless otherwise stated. Here, the term "normal rim" refers to a rim specified for each tire by the standard in a standard system including standards according to which tires are provided, and may be, for example, the standard rim in JATMA, "design rim" in TRA, or "measuring rim" in ETRTO.

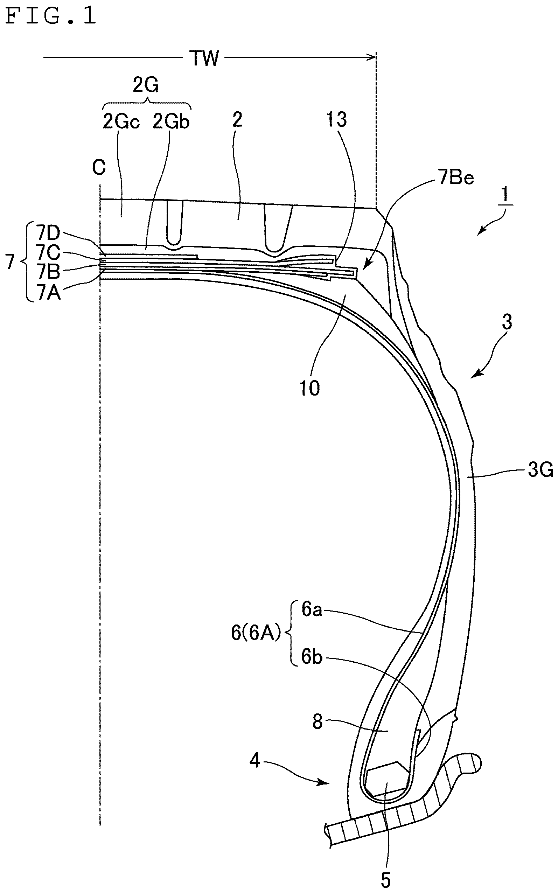

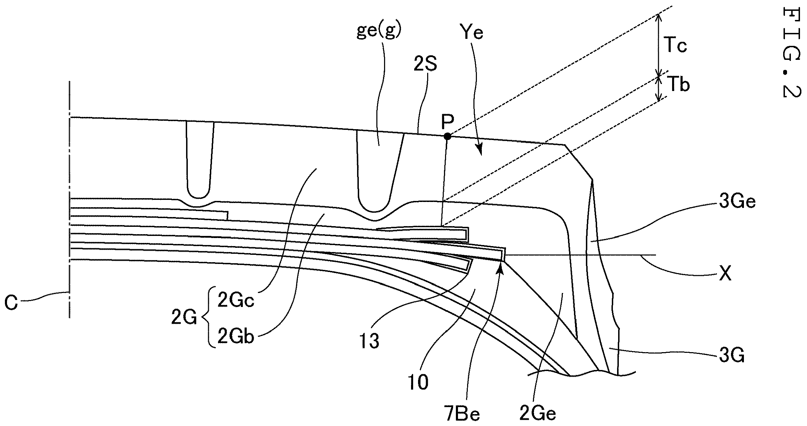

FIG. 1 is a cross-sectional view of a heavy duty tire of the present invention in a normal state inflated to an internal pressure of 50 kPa, and FIG. 2 is an enlarged cross-sectional view of a tread portion thereof.

A heavy duty tire 1 in FIG. 1 is shown as an exemplary embodiment which at least includes a carcass 6 and a belt layer 7. The carcass 6 extends from a tread portion 2 to a bead core 5 of a bead portion 4 via a sidewall portion 3. The belt layer 7 is provided radially outward of the carcass 6 and inward of the tread portion 2.

In the shown embodiment, the carcass 6 is formed of at least one carcass ply 6A (in this example, a single carcass ply 6A) in which carcass cords are arranged at an angle of, for example, 80 to 90° relative to the tire equator. The carcass cords may suitably be steel cords, but organic fiber cords such as nylon, rayon, polyester, or aromatic polyamide may also be used as needed. In the shown embodiment, the carcass ply 6A includes a toroidal ply body portion 6a extending between the bead cores 5 and 5; and a ply turnup portion 6b located at each side of the ply body portion 6a, which is folded and anchored around the bead core 5 from the inside to the outside in the axial direction of the tire. In this embodiment, a bead apex rubber 8 that extends and tapers radially outwardly from the bead core 5 is located between the ply body portion 6a and the ply turnup portion 6b, thereby reinforcing the area from the bead portion 4 to the sidewall portion 3. Here, other structures may be used, such as a wind bead structure in which the ply turnup portion 6b is wound around the bead core 5 and its tip is clamped between the bead core 5 and the bead apex rubber 8, or a structure in which the bead apex is divided into two or more layers.

In the shown embodiment, the belt layer 7 is formed of multiple, usually three or four, belt plies containing steel cords as the belt cords. This embodiment shows a case where the belt layer 7 has a four-layer structure including: a radially innermost first belt ply 7A in which belt cords are arranged at an angle of, for example, $60 \pm 15°$ relative to the tire circumferential direction; and second to fourth belt plies 7B to 7D in which belt cords are arranged at a small angle of, for example, 10 to 35° relative to the tire circumferential direction.

In the shown embodiment, the second belt ply 7B has the largest width among the belt plies 7A to 7D, which is adjusted to be, for example, 0.80 to 0.95 times the tread width TW, and the widths of the first and third belt plies 7A and 7C are each adjusted to be, for example, 85 to 95% of the width of the second belt ply 7B. Thus, substantially the entire width of the tread portion 2 is reinforced with a hoop effect, and stress concentration is inhibited from occurring at the axially (with respect to the tire) outer ends of the belt plies. Moreover, in the shown embodiment, the axially (with respect to the tire) outer ends of at least the second belt ply 7A (in this embodiment, the axially outer ends of the first to third belt plies 7A to 7C) are covered and protected by a thin U-shaped covering rubber 13, thereby preventing damage from the belt cord ends. The rubber hardness of the covering rubber 13 is suitably in the range of 60 to 70° and the thickness thereof is preferably in the range of 0.1 to 1.5 mm, more preferably 0.3 to 0.6 mm. Here, the hardness refers to the Shore A hardness measured at a temperature of 23°C using a type A durometer (Shore A) in accordance with JIS K 6253.

In the shown embodiment, the belt layer 7 has opposite end portions which are gradually separated from the carcass 6 to give a space where a belt cushion rubber 10 having a triangular cross-section is provided. The belt cushion rubber 10 has a maximum thickness at the location of the outer end 7Be of the second belt ply 7B and then extends along the outer surface of the carcass 6 while gradually reducing the thickness. Like the covering rubber 13, the belt cushion rubber 10 is suitably one having a rubber hardness of 60 to 70°. Thus, the shear force between the belt cords and the carcass cords can be relieved while keeping the hoop effect of the belt layer 7 and also maintaining the tread shape. Moreover, by extending from the outer end 7Be of the widest second belt ply 7B, it is also possible to protect the outer end of the inner belt ply 7A, which is likely to act as an initiation point of structural damage.

In the shown embodiment, a tread rubber 2G is provided radially (with respect to the tire) outward of the belt layer 7. The tread rubber consists of a multilayer structure including a cap rubber layer forming a tread outer surface to contact the road surface, and a radially (with respect to the tire) innermost base rubber layer. As an example of this, FIGs. 1 and 2 show an embodiment of a tread rubber 2G which consists of a two-layer structure including a cap rubber layer 2Gc forming a tread outer surface 2S to contact the road surface, and a base rubber layer 2Gb provided radially (with respect to the tire) inward of the cap rubber layer 2Gc, although the embodiment may further include one or more rubber layers between the cap rubber layer 2Gc and the base rubber layer 2Gb.

In the shown embodiment, the axially (with respect to the tire) outer end portion 2Ge of the tread rubber 2G extends radially inwardly across a lateral standard line X extending in the tire axial direction from the axially (with respect to the tire) outer end 7Be of the widest belt ply 7B, and terminates in contact with the belt cushion rubber 10. Also in the shown embodiment, a sidewall rubber 3G provided outward of the carcass 6 and in the sidewall portion 3 has a radially outer end portion 3Ge which covers the axially (with respect to the tire) outer end portion 2Ge of the tread rubber 2G and which extends radially outwardly across the lateral standard line X and terminates.

The tread portion 2 is provided with tread grooves g in various patterns to ensure properties such as wet grip performance. Moreover, the tread rubber 2G includes a shoulder region Ye, as shown in FIG. 2. Here, the shoulder region Ye refers to a land region (shoulder land region) located axially (with respect to the tire) outward from an axially (with respect to the tire) outermost main longitudinal groove (ge) extending in the tire circumferential direction.

The heavy duty tire 1 satisfies the following relationship (1):

$$(1) \quad Tb/Tc \le 0.50$$

wherein Tc denotes the thickness (mm) of the cap rubber layer 2Gc in the shoulder region Ye, and Tb denotes the thickness (mm) of the base rubber layer 2Gb in the shoulder region Ye.

The upper limit of the ratio of Tb/Tc is preferably 0.45 or lower, more preferably 0.40 or lower, still more preferably 0.35 or lower, particularly preferably 0.30 or lower. The lower limit of the ratio of Tb/Tc is preferably 0.10 or higher, more preferably 0.15 or higher, still more preferably 0.20 or higher. When the ratio is within the range indicated above, the advantageous effect tends to be better achieved.

The lower limit of Tc is preferably 10 mm or more, more preferably 13 mm or more, still more preferably 15 mm or more, while the upper limit of Tc is not limited, but is preferably 25 mm or less, more preferably 20 mm or less, still more preferably 18 mm or less. When Tc is within the range indicated above, the advantageous effect tends to be better achieved.

The lower limit of Tb is preferably 1.5 mm or more, more preferably 2.0 mm or more, still more preferably 2.5 mm or more, while the upper limit of Tb is preferably 8.0 mm or less, more preferably 6.0 mm or less, still more preferably 5.0 mm or less, particularly preferably 4.5 mm or less. When Tb is within the range indicated above, the advantageous effect tends to be better achieved.

The reason for this advantageous effect is believed to be as follows.

When the thickness of the cap rubber layer (Tc) and the thickness of the base rubber layer (Tb) are controlled within the above-mentioned ranges, the following actions can be more effectively achieved: the thickness of the cap rubber layer in the shoulder region Ye with a multilayer structure can be sufficiently ensured so that the input from the road surface can be easily released; and the interface between the rubber layers can be kept away from the road surface to reduce the load on the interface. It is believed that for this reason, the chipping resistance in the shoulder region during high-speed running is further improved.

In the present invention, the thickness Tc of the cap rubber layer 2Gc in the shoulder region Ye and the thickness Tb of the base rubber layer 2Gb in the shoulder region Ye are measured as described below.

In FIG. 2, the symbol P denotes a point on the tread outer surface 2S. The double headed arrow Tc indicates the thickness of the cap rubber layer 2Gc in the shoulder region Ye measured at the point P, and the double headed arrow Tb indicates the thickness of the base rubber layer 2Gb in the shoulder region Ye measured at the point P. Tc and Tb are measured at the point P along the normal to the tread outer surface 2S. Moreover, the thickness Tc of the cap rubber layer 2Gc in the shoulder region Ye and the thickness Tb of the base rubber layer 2Gb in the shoulder region Ye refer to the average of the thicknesses of the cap rubber layer 2Gc and the average of the thicknesses of the base rubber layer 2Gb, respectively, measured at points on the tread outer surface 2S within the shoulder region which contact the road surface. Here, when a belt layer or a belt reinforcing layer is provided, the widthwise end of the layer that is outermost in the width direction is defined as the contact end.

The heavy duty tire 1 satisfies the following relationship (2):

$$(2)\ \ Eb'/Ec'\ \le\ 0.60$$

wherein Ec' denotes the complex modulus (MPa) of the cap rubber layer 2Gc in the shoulder region Ye, and Eb' denotes the complex modulus (MPa) of the base rubber layer 2Gb in the shoulder region Ye.

The upper limit of the ratio of Eb'/Ec' is preferably 0.55 or lower, more preferably 0.50 or lower, still more preferably 0.49 or lower, particularly preferably 0.47 or lower. The lower limit of the ratio of Eb'/Ec' is preferably 0.20 or higher, more preferably 0.30 or higher, still more preferably 0.35 or higher. When the ratio is within the range indicated above, the advantageous effect tends to be better achieved.

The lower limit of Ec' is preferably 7.0 MPa or more, more preferably 8.0 MPa or more, still more preferably 9.0 MPa or more, particularly preferably 10.0 MPa or more. The upper limit of Ec' is preferably 20.0 MPa or less, more preferably 17.0 MPa or less, still more preferably 15.0 MPa or less. When Ec' is within the range indicated above, the advantageous effect tends to be better achieved.

The lower limit of Eb' is preferably 2.0 MPa or more, more preferably 2.5 MPa or more, still more preferably 3.0 MPa or more. The upper limit of Eb' is preferably 8.0 MPa or less, more preferably 6.0 MPa or less, still more preferably 5.0 MPa or less, particularly preferably 4.7 MPa or less. When Eb' is within the range indicated above, the advantageous effect tends to be better achieved.

The reason for this advantageous effect is believed to be as follows.

When the complex modulus Ec' of the cap rubber layer 2Gc and the complex modulus Eb' of the base rubber layer 2Gb are controlled within the above-mentioned ranges, the following actions can be more effectively achieved: the base rubber layer in the shoulder region with a multilayer structure can easily deform so that stress concentration at the interface can be reduced; and the cap rubber layer can be deformed from the radially inner side of the tire, so that the occurrence of stress concentration at the tread surface can be prevented. It is believed that for this reason, the chipping resistance in the shoulder region during high-speed running is further improved.

The complex modulus E' can be controlled by the types and amounts of the chemicals (in particular, rubber components, fillers, plasticizers, sulfur, vulcanization accelerators) blended in the rubber composition (cap rubber layer 2Gc or base rubber layer 2Gb). For example, E' tends to be increased by increasing the amount of fillers or increasing the amount of sulfur or vulcanization accelerators.

Herein, Ec' and Eb' are the complex moduli measured under conditions including a temperature of 70°C, an initial strain of 10%, a dynamic strain of $\pm 2\%$, a frequency of 10 Hz, and an extension mode.

Specifically, Ec' and Eb' refer to the complex moduli of test samples having a size of 4 mm in width, 40 mm in length, and 2 mm in thickness cut out of the cap rubber layer and the base rubber layer, respectively, of the tire as measured at a temperature of 70°C, an initial strain of 10%, a dynamic strain of $\pm 2\%$, and a frequency of 10 Hz using a viscoelastic tester such as EPLEXOR series available from GABO.

Here, in the measurement, the longitudinal direction of the samples is adjusted to correspond to the circumferential direction of the tire, and the dynamic strain is applied to the samples in their longitudinal direction.

To better achieve the advantageous effect, the heavy duty tire 1 desirably satisfies the following relationship: tan δb/tan δc ≥ 0.40

wherein tan δc denotes the loss tangent of the cap rubber layer 2Gc in the shoulder region Ye, and tan δb denotes the loss tangent of the base rubber layer 2Gb in the shoulder region Ye.

The lower limit of the ratio of tan δb/tan δc is preferably 0.45 or higher, more preferably 0.47 or higher, still more preferably 0.50 or higher, particularly preferably 0.54 or higher. The upper limit of the ratio of tan δb/tan δc is preferably 1.50 or lower, more preferably 1.20 or lower, still more preferably 1.00 or lower. When the ratio is within the range indicated above, the advantageous effect tends to be better achieved.

The reason for this advantageous effect is believed to be as follows.

When the ratio of the loss tangent tan δb of the base rubber layer 2Gb to the loss tangent tan δc of the cap rubber layer 2Gc in the shoulder region is adjusted to be relatively high; specifically, the ratio of tan δb/tan δc is adjusted to satisfy the relationship: tan δb/tan δc ≥ 0.50, it is considered that shock by deformation can be easily absorbed by the base rubber layer, so that stress concentration at the interface can be reduced. It is also considered that the cap rubber layer can also be deformed from the radially inner side of the tire, so that the occurrence of stress concentration at the tread surface can be prevented.

It is believed that for this reason, it is possible for the heavy duty tire to have improved chipping resistance in the shoulder region during high-speed running.

The lower limit of tan δc is preferably 0.11 or more, more preferably 0.12 or more, still more preferably 0.13 or more. The upper limit of tan δc is preferably 0.20 or less, more preferably 0.18 or less, still more preferably 0.17 or less. When tan δc is within the range indicated above, the advantageous effect tends to be better achieved.

The lower limit of tan δb is preferably 0.01 or more, more preferably 0.02 or more, still more preferably 0.04 or more. The upper limit of tan δb is preferably 0.09 or less, more preferably 0.08 or less, still more preferably 0.07 or less. When tan δb is within the range indicated above, the advantageous effect tends to be better achieved.

The reason for this advantageous effect is believed to be as follows.

When the loss tangent tan δc of the cap rubber layer 2Gc and the loss tangent tan δb of the base rubber layer 2Gb are controlled within the above-mentioned ranges, the following actions can be more effectively achieved: shock can be easily absorbed by the base rubber layer in the shoulder region with a multilayer structure, and the cap rubber layer can be deformed from the radially inner side of the tire, so that the occurrence of stress concentration at the tread surface can be prevented. It is believed that for this reason, the chipping resistance in the shoulder region during high-speed running is further improved.

The loss tangent tan δ can be controlled by the types and amounts of the chemicals (in particular, rubber components, fillers, plasticizers, sulfur, vulcanization accelerators, silane coupling agents) blended in the rubber composition. For example, tan δ tends to be decreased by increasing the amount of isoprene-based rubbers, or reducing the amount of fillers, or reducing the amount of liquid plasticizers.

Herein, tan δc and tan δb are the loss tangents measured under conditions including a temperature of 70°C, an initial strain of 10%, a dynamic strain of $\pm 2\%$, a frequency of 10 Hz, and an extension mode.

Specifically, tan δc and tan δb refer to the loss tangents of test samples having a size of 4 mm in width, 40 mm in length, and 2 mm in thickness cut out of the cap rubber layer and the base rubber layer, respectively, of the tire as measured at a temperature of 70°C, an initial strain of 10%, a dynamic strain of $\pm 2\%$, and a frequency of 10 Hz using a viscoelastic tester such as EPLEXOR series available from GABO.

Here, in the measurement, the longitudinal direction of the samples is adjusted to correspond to the circumferential direction of the tire, and the dynamic strain is applied to the samples in their longitudinal direction.

The cap rubber layer 2Gc in the shoulder region Ye includes a rubber composition for a cap rubber layer, and the base rubber layer 2Gb in the shoulder region Ye includes a rubber composition for a base rubber layer.

The rubber composition for a cap rubber layer or a base rubber layer contains one or more rubber components.

The rubber components in the rubber composition for a cap rubber layer or a base rubber layer contribute to crosslinking and generally correspond to polymer components having a weight average molecular weight (Mw) of 10,000 or more which cannot be extracted with acetone.

The weight average molecular weight of the rubber components is preferably 50,000 or more, more preferably 150,000 or more, still more preferably 200,000 or more, but is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

Any rubber component may be used including those known in the tire field, wherein the cap rubber layer in the shoulder region comprises at least one rubber component including a polybutadiene rubber and a carbon black. Examples include diene rubbers such as isoprene-based rubbers, polybutadiene rubbers (BR), styrene-butadiene rubbers (SBR), acrylonitrile-butadiene rubbers (NBR), chloroprene rubbers (CR), butyl rubbers (IIR), and styrene-isoprene-butadiene copolymer rubbers (SIBR). Each of these may be used alone, or two or more of these may be used in combination. Isoprene-based rubbers, BR, and SBR are preferred among these.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used including for example those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

Any SBR may be used including for example emulsion-polymerized styrene-butadiene rubbers (E-SBR) and solution-polymerized styrene-butadiene rubbers (S-SBR). Examples of commercial products include those from Sumitomo Chemical Co., Ltd., JSR Corporation, Asahi Kasei Corporation, and Zeon Corporation.

The styrene content of the SBR is preferably 5% by mass or higher, more preferably 10% by mass or higher, still more preferably 15% by mass or higher, particularly preferably 20% by mass or higher, most preferably 25% by mass or higher. The styrene content is also preferably 60% by mass or lower, more preferably 50% by mass or lower, still more preferably 40% by mass or lower, particularly preferably 35% by mass or lower. When the styrene content is within the range indicated above, the advantageous effect tends to be better achieved.

Herein, the styrene content of the SBR is determined by $^1$H-NMR analysis.

Any BR may be used including those commonly used in the tire industry, examples of which include high-cis content BR such as BR1220 available from Zeon Corporation, BR150B available from Ube Industries, Ltd., and BR1280 available from LG Chem; BR containing 1,2-syndiotactic polybutadiene crystals (SPB) such as VCR412 and VCR617 both available from Ube Industries, Ltd.; and polybutadiene rubbers synthesized using rare earth catalysts (rare earth-catalyzed BR). Each of these may be used alone, or two or more of these may be used in combination.

The cis content of the BR is preferably 80% by mass or higher, more preferably 85% by mass or higher, still more preferably 90% by mass or higher, but is preferably 99% by mass or lower, more preferably 98% by mass or lower, still more preferably 97% by mass or lower. When the cis content is within the range indicated above, the advantageous effect tends to be better achieved.

Here, the cis content of the BR can be measured by infrared absorption spectrometry.

The rubber components may be either oil extended rubbers prepared by oil extension or resin extended rubbers prepared by resin extension. These may be used alone or in combinations of two or more. Oil extended rubbers are preferred among these.

Here, the oils and resins used in the oil extended rubbers and resin extended rubbers, respectively, are as described later for the plasticizers. Moreover, the oil content of the oil extended rubbers and the resin content of the resin extended rubbers are not limited, but are each usually about 10 to 50 parts by mass per 100 parts by mass of the rubber solid content.

The rubber components may be modified to introduce therein a functional group interactive with filler such as silica.

Examples of the functional group include a silicon-containing group (-SiR$_3$ where each R is the same or different and represents a hydrogen atom, a hydroxy group, a hydrocarbon group, an alkoxy group, or the like), an amino group, an amide group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxy group, a nitrile group, a pyridyl group, an alkoxy group, a hydroxy group, an oxy group, and an epoxy group, all of which may be substituted. Preferred among these is a silicon-containing group. More preferred is a -SiR$_3$ group where each R is the same or different and represents a hydrogen atom, a hydroxy group, a hydrocarbon group (preferably a C1-C6hydrocarbon group, more preferably a C1-C6 alkyl group), or an alkoxy group (preferably a C1-C6 alkoxy group), and at least one R is a hydroxy group.

Specific examples of the compound (modifier) used to introduce the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

As to the rubber components, the rubber composition for a cap rubber layer contains at least BR, and desirably further contains an isoprene-based rubber to better achieve the advantageous effect. Moreover, the rubber composition for a base rubber layer desirably contains an isoprene-based rubber to better achieve the advantageous effect.

In the rubber composition for a cap rubber layer, the amount of isoprene-based rubbers based on 100% by mass of the rubber component content is preferably 20% by mass or more, more preferably 40% by mass or more, still more preferably 50% by mass or more, particularly preferably 60% by mass or more. The upper limit is preferably 90% by mass or less, more preferably 80% by mass or less, still more preferably 70% by mass or less. When the amount is within the range indicated above, the advantageous effect tends to be better achieved.

In the rubber composition for a cap rubber layer, the amount of BR based on 100% by mass of the rubber component content is preferably 5% by mass or more, more preferably 20% by mass or more, still more preferably 30% by mass or more, particularly preferably 40% by mass or more, but is preferably 70% by mass or less, more preferably 60% by mass or less, still more preferably 50% by mass or less. When the amount is within the range indicated above, the advantageous effect tends to be better achieved.

The reason for this advantageous effect is believed to be as follows.

When the amount of BR in the rubber composition for a cap rubber layer is adjusted within the above-mentioned range, in particular 20% by mass or more, or in other words, the amount of flexibly movable polybutadiene rubbers is increased, it is considered that the cap rubber layer is more movable. It is believed that for this reason, the chipping resistance in the shoulder region during high-speed running is further improved.

In the rubber composition for a cap rubber layer, the combined amount of isoprene-based rubbers and BR based on 100% by mass of the rubber component content is preferably 70% by mass or more, more preferably 80% by mass or more, still more preferably 90% by mass or more, and may be 100% by mass. When the combined amount is within the range indicated above, the advantageous effect tends to be better achieved.

In the rubber composition for a base rubber layer, the amount of isoprene-based rubbers based on 100% by mass of the rubber component content is preferably 70% by mass or more, more preferably 80% by mass or more, still more preferably 90% by mass or more, and may be 100% by mass. When the amount is within the range indicated above, the advantageous effect tends to be better achieved.

The rubber composition for a cap rubber layer or a base rubber layer desirably contains a filler.

To better achieve the advantageous effect, the filler is preferably carbon black, and the rubber composition for a cap rubber layer contains at least carbon black.

Non-limiting examples of the carbon black include N134, N110, N220, N234, N219, N339, N330, N326, N351, N550, and N762. The raw material of the carbon black may be a biomass material such as lignin or a plant oil. Moreover, the carbon black may be produced either by burning such as the furnace process or by hydrothermal carbonization (HTC). Examples of commercial products include those from Asahi Carbon Co., Ltd., Cabot Japan K.K., Tokai Carbon Co., Ltd., Mitsubishi Chemical Corporation, Lion Corporation, NIPPON STEEL Carbon Co., Ltd., and Columbia Carbon. These may be used alone or in combinations of two or more.

The nitrogen adsorption specific surface area ($N_2SA$) of the carbon black is preferably 50 $m^2/g$ or more, more preferably 70 $m^2/g$ or more, still more preferably 75 $m^2/g$ or more. The $N_2SA$ is also preferably 200 $m^2/g$ or less, more preferably 170 $m^2/g$ or less, still more preferably 150 $m^2/g$ or less. When the $N_2SA$ is within the range indicated above, the advantageous effect tends to be better achieved.

Here, the nitrogen adsorption specific surface area of the carbon black is determined in accordance with JIS K6217-2:2001.

Examples of fillers other than carbon black that may be used include inorganic fillers.

Examples of the inorganic fillers include silica, clay, alumina, talc, calcium carbonate, magnesium carbonate, aluminum hydroxide, magnesium hydroxide, magnesium oxide, and titanium oxide. These may be used alone or in combinations of two or more. Silica is preferred among these.

Examples of the silica include dry silica (anhydrous silicic acid) and wet silica (hydrous silicic acid). Wet silica is preferred because it has a large number of silanol groups. The raw material of the silica may be either water glass (sodium silicate) or a biomass material such as rice husks. Examples of commercial products include those from Evonik, Tosoh Silica Corporation, Solvay Japan, Ltd., and Tokuyama Corporation. Each of these may be used alone, or two or more of these may be used in combination.

The nitrogen adsorption specific surface area ($N_2SA$) of the silica is preferably 50 $m^2/g$ or more, more preferably 100 $m^2/g$ or more, still more preferably 150 $m^2/g$ or more. Moreover, the upper limit of the $N_2SA$ of the silica is not limited, but is preferably 350 m$^2$/g or less, more preferably 250 m$^2$/g or less, still more preferably 200 m$^2$/g or less. When the N$_2$SA is within the range indicated above, the advantageous effect tends to be better achieved.

Here, the N$_2$SA of the silica is measured by a BET method in accordance with ASTM D3037-93.

Among the fillers, the rubber composition for a cap rubber layer suitably contains a carbon black having a N$_2$SA of 80 to 150 m$^2$/g, more preferably 110 to 150 m$^2$/g, still more preferably 130 to 150 m$^2$/g, to better achieve the advantageous effect. The rubber composition for a base rubber layer suitably contains a carbon black having a N$_2$SA of 60 to 120 m$^2$/g, more preferably 70 to 100 m$^2$/g, still more preferably 75 to 85 m$^2$/g.

In the rubber composition for a cap rubber layer, the amount of carbon black per 100 parts by mass of the rubber component content is preferably 30 parts by mass or more, more preferably 40 parts by mass or more, still more preferably 50 parts by mass or more, particularly preferably 55 parts by mass or more, but is preferably 150 parts by mass or less, more preferably 100 parts by mass or less, still more preferably 80 parts by mass or less, particularly preferably 75 parts by mass or less. When the amount is within the range indicated above, the advantageous effect tends to be better achieved.

In the rubber composition for a cap rubber layer, the amount (total amount) of fillers is preferably 30 parts by mass or more, more preferably 40 parts by mass or more, still more preferably 50 parts by mass or more, particularly preferably 55 parts by mass or more, but is preferably 150 parts by mass or less, more preferably 100 parts by mass or less, still more preferably 80 parts by mass or less, particularly preferably 75 parts by mass or less. When the amount is within the range indicated above, the advantageous effect tends to be better achieved.

To better achieve the advantageous effect, the percentage of carbon black based on 100% by mass of the filler content in the rubber composition for a cap rubber layer is preferably 50% by mass or higher, more preferably 80% by mass or higher, still more preferably 90% by mass or higher, and may be 100% by mass. When the percentage is within the range indicated above, the advantageous effect tends to be better achieved.

In the rubber composition for a base rubber layer, the amount of carbon black per 100 parts by mass of the rubber component content is preferably 10 parts by mass or more, more preferably 20 parts by mass or more, still more preferably 30 parts by mass or more, particularly preferably 40 parts by mass or more, but is preferably 100 parts by mass or less, more preferably 80 parts by mass or less, still more preferably 70 parts by mass or less, particularly preferably 60 parts by mass or less. When the amount is within the range indicated above, the advantageous effect tends to be better achieved.

In the rubber composition for a base rubber layer, the amount (total amount) of fillers per 100 parts by mass of the rubber component content is preferably 10 parts by mass or more, more preferably 20 parts by mass or more, still more preferably 30 parts by mass or more, particularly preferably 40 parts by mass or more, but is preferably 100 parts by mass or less, more preferably 80 parts by mass or less, still more preferably 70 parts by mass or less, particularly preferably 60 parts by mass or less. When the amount is within the range indicated above, the advantageous effect tends to be better achieved.

To better achieve the advantageous effect, the percentage of carbon black based on 100% by mass of the filler content in the rubber composition for a base rubber layer is preferably 50% by mass or higher, more preferably 80% by mass or higher, still more preferably 90% by mass or higher, and may be 100% by mass. When the percentage is within the range indicated above, the advantageous effect tends to be better achieved.

The rubber composition for a cap rubber layer or a base rubber layer may contain a plasticizer. The term "plasticizer" refers to a material that can impart plasticity to polymer components, and examples include liquid plasticizers (plasticizers which are liquid at room temperature (25°C)) and resins (resins which are solid at room temperature (25°C)).

Non-limiting examples of liquid plasticizers (plasticizers which are liquid at room temperature (25°C)) that may be used in the rubber composition for a cap rubber layer or a base rubber layer include oils and liquid polymers (e.g., liquid resins, liquid diene polymers, liquid farnesene polymers). These may be used alone or in combinations of two or more.

Examples of oils include process oils, plant oils, and mixtures thereof. Examples of process oils include paraffinic process oils, aromatic process oils, and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Process oils (e.g., paraffinic process oils, aromatic process oils, naphthenic process oils) and plant oils are preferred among these. Here, from the standpoint of life cycle assessment, oils after being used as lubricating oils for mixers for mixing rubber, engines, or other applications, waste cooking oils, or the like may appropriately be used as the process oils and plant oils.

Examples of liquid resins include terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of these resins may also be used.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. The chain end or backbone of these polymers may be modified with a polar group. Hydrogenated products of these polymers may also be used.

Examples of resins (resins which are solid at room temperature (25°C)) that may be used in the rubber composition for a cap rubber layer or a base rubber layer include aromatic vinyl polymers, coumarone-indene resins, coumarone resins, indene resins, phenol resins, rosin resins, petroleum resins, terpene resins, and acrylic resins, all of which are solid at room temperature (25°C). The resins may also be hydrogenated. These may be used alone or in combinations of two or more. Aromatic vinyl polymers, petroleum resins, and terpene resins are preferred among these.

The softening point of the resins is preferably 50°C or higher, more preferably 55°C or higher, still more preferably 60°C or higher. The upper limit is preferably 160°C or lower, more preferably 150°C or lower, still more preferably 145°C or lower. When the softening point is within the range indicated above, the advantageous effect tends to be better achieved. Here, the softening point of the resins is determined as set forth in JIS K 6220-1:2001 using a ring and ball softening point measuring apparatus and defined as the temperature at which the ball drops down.

In the rubber composition for a cap rubber layer, the amount of plasticizers (total amount of plasticizers) per 100 parts by mass of the rubber component content is preferably 5 parts by mass or less, more preferably 1 part by mass or less, still more preferably 0.1 parts by mass or less, particularly preferably 0.01 parts by mass or less, and may be 0 parts by mass. When the amount is within the range indicated above, the advantageous effect tends to be better achieved.

In the rubber composition for a base rubber layer, the amount of plasticizers (total amount of plasticizers) per 100 parts by mass of the rubber component content is preferably 5 parts by mass or less, more preferably 1 part by mass or less, still more preferably 0.1 parts by mass or less, particularly preferably 0.01 parts by mass or less, and may be 0 parts by mass. When the amount is within the range indicated above, the advantageous effect tends to be better achieved.

The plasticizers may be commercially available from, for example, Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., The Nisshin Oillio Group, Ltd., Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., and Taoka Chemical Co., Ltd.

The rubber composition for a cap rubber layer or a base rubber layer may contain a silane coupling agent.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Examples of commercial products include those from Evonik Degussa, Momentive, Shin-Etsu Silicone, Tokyo Chemical Industry Co., Ltd., AZmax. Co., and Dow Corning Toray Co., Ltd. These may be used alone or in combinations of two or more.

In the rubber composition for a cap rubber layer or a base rubber layer, the amount of silane coupling agents per 100 parts by mass of the silica content is preferably 3 parts by mass or more, more preferably 6 parts by mass or more, still more preferably 8 parts by mass or more, but is preferably 16 parts by mass or less, more preferably 14 parts by mass or less, still more preferably 12 parts by mass or less. When the amount is within the range indicated above, the advantageous effect tends to be better achieved.

The rubber composition for a cap rubber layer or a base rubber layer may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Examples of commercial products include those from Seiko Chemical Co., Ltd., Sumitomo Chemical Co., Ltd., Ouchi Shinko Chemical Industrial Co., Ltd., and Flexsys. Each of these may be used alone, or two or more of these may be used in combination.

In the rubber composition for a cap rubber layer or a base rubber layer, the amount of antioxidants per 100 parts by mass of the rubber component content is preferably 0.5 parts by mass or more, more preferably 0.8 parts by mass or more, still more preferably 1.0 parts by mass or more, but is preferably 10.0 parts by mass or less, more preferably 6.0 parts by mass or less, still more preferably 4.0 parts by mass or less. When the amount is within the range indicated above, the advantageous effect tends to be better achieved.

The rubber composition for a cap rubber layer or a base rubber layer may contain a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. Examples of commercial products include those from Ouchi Shinko Chemical Industrial Co., Ltd., Nippon Seiro Co., Ltd., and Seiko Chemical Co., Ltd. Each of these may be used alone, or two or more of these may be used in combination.

In the rubber composition for a cap rubber layer or a base rubber layer, the amount of waxes per 100 parts by mass of the rubber component content is preferably 1 part by mass or more, more preferably 2 parts by mass or more, but is preferably 10 parts by mass or less, more preferably 6 parts by mass or less. When the amount is within the range indicated above, the advantageous effect tends to be better achieved.

The rubber composition for a cap rubber layer or a base rubber layer may contain stearic acid.

The stearic acid used may be a conventional one. Examples of commercial products include those from NOF Corporation, Kao Corporation, FUJIFILM Wako Pure Chemical Corporation, and Chiba Fatty Acid Co., Ltd. Each of these may be used alone, or two or more of these may be used in combination.

In the rubber composition for a cap rubber layer or a base rubber layer, the amount of stearic acid per 100 parts by mass of the rubber component content is preferably 1.0 parts by mass or more, more preferably 2.0 parts by mass or more, still more preferably 3.0 parts by mass or more, but is preferably 10.0 parts by mass or less, more preferably 6.0 parts by mass or less. When the amount is within the range indicated above, the advantageous effect tends to be better achieved.

The rubber composition for a cap rubber layer or a base rubber layer may contain zinc oxide.

The zinc oxide used may be a conventional one. Examples of commercial products include those from Mitsui Mining & Smelting Co., Ltd., Toho Zinc Co., Ltd., HakusuiTech Co., Ltd., Seido Chemical Industry Co., Ltd., and Sakai Chemical Industry Co., Ltd. Each of these may be used alone, or two or more of these may be used in combination.

In the rubber composition for a cap rubber layer or a base rubber layer, the amount of zinc oxide per 100 parts by mass of the rubber component content is preferably 1.0 parts by mass or more, more preferably 2.5 parts by mass or more, still more preferably 3.0 parts by mass or more, but is preferably 10.0 parts by mass or less, more preferably 6.0 parts by mass or less. When the amount is within the range indicated above, the advantageous effect tends to be better achieved.

The rubber composition for a cap rubber layer or a base rubber layer may contain sulfur.

Examples of the sulfur include those commonly used as crosslinking agents in the rubber industry, such as powdered sulfur, precipitated sulfur, colloidal sulfur, insoluble sulfur, highly dispersible sulfur, and soluble sulfur. Examples of commercial products include those from Tsurumi Chemical Industry Co., Ltd., Karuizawa sulfur Co., Ltd., Shikoku Chemicals Corporation, Flexsys, Nippon Kanryu Industry Co., Ltd., and Hosoi Chemical Industry Co., Ltd. These may be used alone or in combinations of two or more.

In the rubber composition for a cap rubber layer or a base rubber layer, the amount of sulfur per 100 parts by mass of the rubber component content is preferably 0.5 parts by mass or more, more preferably 0.8 parts by mass or more, still more preferably 1.0 parts by mass or more, but is preferably 3.5 parts by mass or less, more preferably 2.8 parts by mass or less, still more preferably 2.5 parts by mass or less. When the amount is within the range indicated above, the advantageous effect tends to be better achieved.

The rubber composition for a cap rubber layer or a base rubber layer may contain a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Examples of commercial products include those from Sumitomo Chemical Co., Ltd., and Ouchi Shinko Chemical Industrial Co., Ltd. These may be used alone or in combinations of two or more.

In the rubber composition for a cap rubber layer or a base rubber layer, the amount of vulcanization accelerators per 100 parts by mass of the rubber component content is preferably 0.5 parts by mass or more, more preferably 0.8 parts by mass or more, still more preferably 1.0 parts by mass or more, but is preferably 10.0 parts by mass or less, more preferably 8.0 parts by mass or less, still more preferably 7.0 parts by mass or less. When the amount is within the range indicated above, the advantageous effect tends to be better achieved.

In addition to the above-mentioned components, the rubber composition for a cap rubber layer or a base rubber layer may further contain additives commonly used in the tire industry, such as organic peroxides. The amounts of such additives are each preferably 0.1 to 200 parts by mass per 100 parts by mass of the rubber component content.

The rubber composition for a cap rubber layer or a base rubber layer may be prepared, for example, by kneading the above-mentioned components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 85 to 110°C. Then, the composition obtained after kneading vulcanizing agents and vulcanization accelerators is usually vulcanized by, for example, press vulcanization. The vulcanization temperature is usually 140 to 190°C, preferably 150 to 185°C. The vulcanization time is usually 5 to 15 minutes.

The heavy duty tire 1 in FIGs. 1 and 2 satisfies the following relationship (3):

$$(3) \quad Bca/(Tb/Tc) \geq 40$$

wherein Tc denotes the thickness (mm) of the cap rubber layer 2Gc in the shoulder region Ye; Tb denotes the thickness (mm) of the base rubber layer 2Gb in the shoulder region Ye; and Bca denotes the polybutadiene rubber content (% by mass) based on 100% by mass of the rubber component content in the cap rubber layer 2Gc in the shoulder region Ye.

The lower limit of the ratio of Bca/(Tb/Tc) (% by mass) is preferably 60 or higher, more preferably 100 or higher, still more preferably 120 or higher, particularly preferably 130 or higher. The upper limit of the ratio of Bca/(Tb/Tc) (% by mass) is preferably 200 or lower, more preferably 170 or lower, still more preferably 160 or lower, particularly preferably 150 or less. When the ratio is within the range indicated above, the advantageous effect tends to be better achieved.

EXAMPLES

The present invention will be specifically described with reference to, but not limited to, examples.

The following describes the chemicals used in the examples and comparative examples.

NR: TSR20
BR: BR150B (vinyl content: 1% by mass, cis content: 97% by mass) available from Ube Industries, Ltd.
Carbon black N220: SHOBLACK N220 ($N_2SA$: 114 $m^2/g$) available from Cabot Japan K.K.
Carbon black N134: SHOBLACK N134 ($N_2SA$: 148 $m^2/g$) available from Cabot Japan K.K.
Carbon black N330: SHOBLACK N330 ($N_2SA$: 78 $m^2/g$) available from Cabot Japan K.K.
Wax: Ozoace 0355 available from Nippon Seiro Co., Ltd.
Antioxidant: NOCRAC 6C (N-(1,3-dimethylbutyl)-N'-phenyl-p-phenylenediamine) available from Ouchi Shinko Chemical Industrial Co., Ltd.
Stearic acid: stearic acid "TSUBAKI" available from NOF Corporation
Zinc oxide: zinc oxide #1 available from Mitsui Mining & Smelting Co., Ltd.
Sulfur: HK200-5 (5 mass% oil-containing powdered sulfur) available from Hosoi Chemical Industry Co., Ltd.
Vulcanization accelerator: Nocceler NS (N-tert-butyl-2-benzothiazolylsulfenamide) available from Ouchi Shinko Chemical Industrial Co., Ltd.

(Examples and Comparative Examples)

The materials other than the sulfur and vulcanization accelerator according to the blend recipe of the rubber composition for a cap rubber layer shown in Table 1 or 2 or the rubber composition for a base rubber layer shown in Table 3 were kneaded at 150°C for five minutes using a 1.7 L Banbury mixer (Kobe Steel, Ltd.) to give a kneaded mixture. Then, the sulfur and vulcanization accelerator were added to the kneaded mixture, and they were kneaded at 80°C for five minutes using an open roll mill to give an unvulcanized rubber composition for a cap rubber layer or an unvulcanized rubber composition for a base rubber layer.

According to the specification shown in Table 1 or 2, the unvulcanized rubber composition for a cap rubber layer and the unvulcanized rubber composition for a base rubber layer were formed into the shapes of a cap rubber layer and a base rubber layer, respectively, and then assembled with other tire components to build an unvulcanized tire, followed by press vulcanization at 150°C for 30 minutes to obtain a test tire (heavy duty tire, size: 11R22.5).

The test tires prepared as above were subjected to the evaluations below. Tables 1 and 2 show the results.
It should be noted that the following evaluation standard was used to calculate indices in the evaluations.

Tables 1 and 2: Comparative Example 8

<Viscoelastic testing>

Test samples having a size of 4 mm in width, 40 mm in length, and 2 mm in thickness were cut out of the cap rubber layer and base rubber layer of each test tire, and the complex moduli Ec' and Eb' and the loss tangents tan $\delta$c and tan $\delta$b of the test samples were measured using a viscoelastic tester of EPLEXOR series available from GABO under conditions including a temperature of 70°C, an initial strain of 10%, a dynamic strain of $\pm$2%, and a frequency of 10 Hz.

<Chipping resistance during high-speed running>

Each test tire was run at 80 km/h under a load of 26.72 kN for 30 minutes using a drum type running tester in which a metal slat (projection) was attached at two circumferential locations on the drum. Then, the presence of chips on the surface of the tire was observed to determine the value of "Number of chips $\times$ Depth of cut", which was expressed as an index. A higher index indicates better chipping resistance.

[Table 1]

Rubber composition for cap rubber layer, Tire specification

| | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|
| Composition (parts by mass) | NR | 80 | 80 | 60 | 60 | 80 | 80 | 80 | 80 | 85 | 85 | 80 | 80 | 80 | 80 |
| | BR | 20 | 20 | 40 | 40 | 20 | 20 | 20 | 20 | 15 | 15 | 20 | 20 | 20 | 20 |
| | Carbon black N220 | 55 | - | 55 | - | 55 | - | 55 | - | 55 | - | 55 | - | 65 | - |
| | Carbon black N134 | - | 55 | - | 55 | - | 55 | - | 55 | - | 55 | - | 55 | - | 65 |
| | Wax | 1 | 1 | 1 | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 | 2 | 2 | 2 |
| | Stearic acid | 3 | 3 | 3 | 3 | 3 | 3 | 3 | 3 | 3 | 3 | 3 | 3 | 3 | 3 |
| | Zinc oxide | 4 | 4 | 4 | 4 | 4 | 4 | 4 | 4 | 4 | 4 | 4 | 4 | 4 | 4 |
| | Sulfur | 1 | 1 | 1 | 1 | 1 | 1 | 1.2 | 0.8 | 1 | 1 | 0.7 | 0.8 | 1 | 1 |
| | Vulcanization accelerator | 1 | 1 | 1 | 1 | 1 | 1 | 1 | 1 | 1 | 1 | 0.7 | 0.7 | 1 | 1 |
| Rubber composition for base rubber layer | | Blend 2 | Blend 2 | Blend 2 | Blend 2 | Blend 2 | Blend 2 | Blend 2 | Blend 2 | Blend 2 | Blend 2 | Blend 2 | Blend 2 | Blend 2 | Blend 2 |
| Thickness of cap rubber layer, Tc (mm) | | 15 | 15 | 15 | 15 | 15 | 15 | 15 | 15 | 15 | 15 | 15 | 15 | 15 | 15 |
| Thickness of base rubber layer, Tb (mm) | | 4.5 | 4.5 | 4.5 | 4.5 | 6.0 | 6.0 | 4.5 | 4.5 | 4.5 | 4.5 | 4.5 | 4.5 | 4.5 | 4.5 |
| Tb/Tc | | 0.30 | 0.30 | 0.30 | 0.30 | 0.40 | 0.40 | 0.30 | 0.30 | 0.30 | 0.30 | 0.30 | 0.30 | 0.30 | 0.30 |
| Complex modulus of cap rubber layer, Ec' (MPa) | | 8.2 | 9.6 | 8.5 | 10.0 | 8.2 | 9.6 | 8.5 | 8.2 | 8.2 | 9.6 | 7.9 | 8.0 | 9.2 | 10.4 |
| Complex modulus of base rubber layer, Eb' (MPa) | | 4.7 | 4.7 | 4.7 | 4.7 | 4.7 | 4.7 | 4.7 | 4.7 | 4.7 | 4.7 | 4.7 | 4.7 | 4.7 | 4.7 |
| Eb'/Ec' | | 0.57 | 0.49 | 0.55 | 0.47 | 0.57 | 0.49 | 0.55 | 0.57 | 0.57 | 0.49 | 0.59 | 0.59 | 0.51 | 0.45 |
| Bca/(Tb/Tc) | | 67 | 67 | 133 | 133 | 50 | 50 | 67 | 67 | 50 | 50 | 67 | 67 | 67 | 67 |
| tan δc | | 0.13 | 0.14 | 0.13 | 0.14 | 0.13 | 0.14 | 0.13 | 0.13 | 0.13 | 0.14 | 0.16 | 0.17 | 0.15 | 0.16 |
| tan δb | | 0.07 | 0.07 | 0.07 | 0.07 | 0.07 | 0.07 | 0.07 | 0.07 | 0.07 | 0.07 | 0.07 | 0.07 | 0.07 | 0.07 |
| tan δb/tan δc | | 0.54 | 0.50 | 0.54 | 0.50 | 0.54 | 0.50 | 0.54 | 0.54 | 0.54 | 0.50 | 0.44 | 0.41 | 0.47 | 0.44 |
| Chipping resistance during high-speed running | | 104 | 111 | 113 | 117 | 102 | 110 | 101 | 108 | 102 | 109 | 101 | 107 | 102 | 110 |

[Table 2]

Rubber composition for cap rubber layer, Tire specification

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| Composition (parts by mass) | NR | 80 | 80 | 60 | 60 | 80 | 80 | 60 | 60 | 80 | 80 | 60 | 60 |
| | BR | 20 | 20 | 40 | 40 | 20 | 20 | 40 | 40 | 20 | 20 | 40 | 40 |
| | Carbon black N220 | 55 | - | 55 | - | 55 | - | 55 | - | 55 | - | 55 | - |
| | Carbon black N134 | - | 55 | - | 55 | - | 55 | - | 55 | - | 55 | - | 55 |
| | Wax | 1 | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 | 2 |
| | Stearic acid | 3 | 3 | 3 | 3 | 3 | 3 | 3 | 3 | 3 | 3 | 3 | 3 |
| | Zinc oxide | 4 | 4 | 4 | 4 | 4 | 4 | 4 | 4 | 4 | 4 | 4 | 4 |
| | Sulfur | 1 | 1 | 1 | 1 | 1 | 1 | 1 | 1 | 1 | 1 | 1 | 1 |
| | Vulcanization accelerator | 1 | 1 | 1 | 1 | 1 | 1 | 1 | 1 | 1 | 1 | 1 | 1 |
| Rubber composition for base rubber layer | | Blend 1 | Blend 1 | Blend 1 | Blend 1 | Blend 2 | Blend 2 | Blend 2 | Blend 2 | Blend 1 | Blend 1 | Blend 1 | Blend 1 |
| Thickness of cap rubber layer, Tc (mm) | | 12.2 | 12.2 | 12.2 | 12.2 | 12.2 | 12.2 | 12.2 | 12.2 | 15.0 | 15.0 | 15.0 | 15.0 |
| Thickness of base rubber layer, Tb (mm) | | 9.0 | 9.0 | 9.0 | 9.0 | 9.0 | 9.0 | 9.0 | 9.0 | 4.5 | 4.5 | 4.5 | 4.5 |
| Tb/Tc | | 0.74 | 0.74 | 0.74 | 0.74 | 0.74 | 0.74 | 0.74 | 0.74 | 0.30 | 0.30 | 0.30 | 0.30 |
| Complex modulus of cap rubber layer, Ec' (MPa) | | 8.20 | 9.60 | 8.50 | 10.00 | 8.20 | 9.60 | 8.50 | 10.00 | 8.20 | 9.60 | 8.50 | 10.00 |
| Complex modulus of base rubber layer, Eb' (MPa) | | 6.30 | 6.30 | 6.30 | 6.30 | 4.70 | 4.70 | 4.70 | 4.70 | 6.30 | 6.30 | 6.30 | 6.30 |
| Eb'/Ec' | | 0.77 | 0.66 | 0.74 | 0.63 | 0.57 | 0.49 | 0.55 | 0.47 | 0.77 | 0.66 | 0.74 | 0.63 |
| Bca/(Tb/Tc) | | 27 | 27 | 54 | 54 | 27 | 27 | 54 | 54 | 67 | 67 | 133 | 133 |
| tan δc | | 0.13 | 0.14 | 0.13 | 0.14 | 0.13 | 0.14 | 0.13 | 0.14 | 0.13 | 0.14 | 0.13 | 0.14 |
| tan δb | | 0.06 | 0.06 | 0.06 | 0.06 | 0.07 | 0.07 | 0.07 | 0.07 | 0.06 | 0.06 | 0.06 | 0.06 |
| tan δb/tan δc | | 0.46 | 0.43 | 0.46 | 0.43 | 0.54 | 0.50 | 0.54 | 0.50 | 0.46 | 0.43 | 0.46 | 0.43 |
| Chipping resistance during high-speed running | | 58 | 60 | 64 | 72 | 88 | 92 | 97 | 100 | 54 | 56 | 64 | 72 |

[Table 3]

Rubber composition for base rubber layer

| | | Blend 1 | Blend 2 |
|---|---|---|---|
| Composition (parts by mass) | NR | 100 | 100 |
| | Carbon black N330 | 45 | 40 |
| | Antioxidant | 1 | 1 |
| | Stearic acid | 3 | 3 |
| | Zinc oxide | 3 | 3 |
| | Sulfur | 3 | 1.3 |
| | Vulcanization accelerator | 1 | 1 |

Tables 1 and 2 show that the examples exhibited excellent chipping resistance during high-speed running.

REFERENCE SIGNS LIST

1        heavy duty tire
2        tread portion
2S       tread outer surface
2G       tread rubber
2Gb      base rubber layer
2Gc      cap rubber layer
3        sidewall portion
3G       sidewall rubber
4        bead portion
5        bead core
6        carcass
7        belt layer
Ye       shoulder region
Tc       thickness of cap rubber layer 2Gc in shoulder region Ye
Tb       thickness of base rubber layer 2Gb in shoulder region Ye
ge       main longitudinal groove
P        point on tread outer surface 2S
C        tire equator

**Claims**

1.  A heavy duty tire (1), comprising a tread portion (2),

    the tread portion (2) including a shoulder region (Ye) located axially outward from an axially outermost main longitudinal groove (ge) extending in a circumferential direction,
    the tread portion (2) being provided with a tread rubber (2G) consisting of a multilayer structure including a cap rubber layer (2Gc) forming a tread outer surface (2S) and a radially innermost base rubber layer (2Gb),
    the cap rubber layer (2Gc) in the shoulder region (Ye) comprising at least one rubber component including a polybutadiene rubber and a carbon black,
    **characterized in that**

    the heavy duty tire (1) is satisfying the following relationships (1) to (3):

$$(1) \quad \text{Tb/Tc} \leq 0.50;$$

$$(2) \quad \text{Eb'/Ec'} \leq 0.60;$$

and

$$(3) \quad \text{Bca/(Tb/Tc)} \geq 40$$

wherein Tc and Ec' denote a thickness and a complex modulus, respectively, of the cap rubber layer (2Gc) in the shoulder region (Ye); Tb and Eb' denote a thickness and a complex modulus, respectively, of the base rubber layer (2Gb) in the shoulder region (Ye); and Bca denotes a polybutadiene rubber content based on 100% by mass of a rubber component content in the cap rubber layer (2Gc),
wherein Ec' and Eb' are the complex moduli measured under conditions including a temperature of 70°C, an initial strain of 10%, a dynamic strain of $\pm 2\%$, a frequency of 10 Hz, and an extension mode,
and further Ec' and Eb' refer to the complex moduli of test samples having a size of 4 mm in width, 40 mm in length, and 2 mm in thickness cut out of the cap rubber layer (2Gc) and the base rubber layer (2Gb), respectively, of the tire as measured at a temperature of 70°C, an initial strain of 10%, a dynamic strain of $\pm 2\%$, and a frequency of 10 Hz using a viscoelastic tester,
and in the measurement, the longitudinal direction of the samples is adjusted to correspond to the circumferential direction of the tire, and the dynamic strain is applied to the samples in their longitudinal direction.

2. The heavy duty tire (1) according to claim 1,
wherein the heavy duty tire (1) satisfies the following relationship:

$$\text{Tb/Tc} \leq 0.30.$$

3. The heavy duty tire (1) according to claim 1 or 2,
wherein the heavy duty tire (1) satisfies the following relationship:

$$\text{Eb'/Ec'} \leq 0.50.$$

4. The heavy duty tire (1) according to any one of claims 1 to 3,
wherein the heavy duty tire (1) satisfies the following relationship:

$$\text{Bca/(Tb/Tc)} \geq 60.$$

5. The heavy duty tire (1) according to any one of claims 1 to 3,
wherein the heavy duty tire (1) satisfies the following relationship:

$$\text{Bca/(Tb/Tc)} \geq 120.$$

6. The heavy duty tire (1) according to any one of claims 1 to 5,
wherein the heavy duty tire (1) satisfies the following relationship:

$\tan \delta b / \tan \delta c \geq 0.50$
wherein $\tan \delta c$ denotes a loss tangent of the cap rubber layer (2Gc) in the shoulder region (Ye), and $\tan \delta b$ denotes a loss tangent of the base rubber layer (2Gb) in the shoulder region (Ye),
wherein $\tan \delta c$ and $\tan \delta b$ are the loss tangents measured under conditions including a temperature of 70°C, an initial strain of 10%, a dynamic strain of $\pm 2\%$, a frequency of 10 Hz, and an extension mode,
and further $\tan \delta c$ and $\tan \delta b$ refer to the loss tangents of test samples having a size of 4 mm in width, 40 mm in length, and 2 mm in thickness cut out of the cap rubber layer (2Gc) and the base rubber layer (2Gb), respectively, of the tire as measured at a temperature of 70°C, an initial strain of 10%, a dynamic strain of $\pm2\%$, and a frequency of 10 Hz using a viscoelastic tester,
and in the measurement, the longitudinal direction of the samples is adjusted to correspond to the circumferential direction of the tire, and the dynamic strain is applied to the samples in their longitudinal direction.

7. The heavy duty tire (1) according to any one of claims 1 to 6,
   wherein the heavy duty tire (1) satisfies the following relationship:

$$Tc \geq 13 \text{ mm.}$$

8. The heavy duty tire (1) according to any one of claims 1 to 7,
   wherein the heavy duty tire (1) satisfies the following relationship:

$$Eb' \leq 5.0 \text{ MPa.}$$

9. The heavy duty tire (1) according to any one of claims 6 to 8,
   wherein the heavy duty tire (1) satisfies the following relationship:

$$\tan \delta b \geq 0.04.$$

10. The heavy duty tire (1) according to any one of claims 1 to 9,
    wherein the cap rubber layer (2Gc) in the shoulder region (Ye) has a polybutadiene rubber content of 20% by mass or more based on 100% by mass of the rubber component content.


**Patentansprüche**

1. Schwerlastreifen (1), der einen Laufstreifenabschnitt (2) umfasst,

   wobei der Laufstreifenabschnitt (2) einen Schulterbereich (Ye) umfasst, der sich axial außerhalb einer axial äußersten Hauptlängsrille (ge) befindet, die sich in einer Umfangsrichtung erstreckt,
   wobei der Laufstreifenabschnitt (2) mit einem Laufstreifenkautschuk (2G) versehen ist, der aus einer mehrlagigen Struktur besteht, die eine Deckkautschukschicht (2Gc), die eine äußere Laufstreifenoberfläche (2S) bildet, und eine radial innerste Basiskautschukschicht (2Gb) umfasst,
   wobei die Deckkautschukschicht (2Gc) in dem Schulterbereich (Ye) mindestens eine Kautschukkomponente umfasst, die einen Polybutadienkautschuk und einen Ruß umfasst,
   **dadurch gekennzeichnet, dass**

   der Schwerlastreifen (1) den folgenden Verhältnissen (1) bis (3) genügt:

$$(1) \quad Tb/Tc \leq 0,50;$$

$$(2) \quad Eb'/Ec' \leq 0,60;$$

   und

$$(3) \quad Bca/(Tb/Tc) \geq 40$$

   wobei Tc und Ec' eine Dicke bzw. einen komplexen Modul der Deckkautschukschicht (2Gc) in dem Schulterbereich (Ye) bezeichnen; Tb und Eb' eine Dicke bzw. einen komplexen Modul der Basiskautschukschicht (2Gb) in dem Schulterbereich (Ye) bezeichnen; und Bca einen Polybutadienkautschuk-Gehalt, bezogen auf 100 Massen-% eines Kautschukkomponenten-Gehalts in der Deckkautschukschicht (2Gc), bezeichnet,

wobei Ec' und Eb' die komplexen Moduln sind, welche unter Bedingungen gemessen sind, die eine Temperatur von 70°C, eine Anfangsdehnung von 10%, eine dynamische Dehnung von ±2%, eine Frequenz von 10 Hz und einen Streckmodus umfassen,

und sich Ec' und Eb' zudem auf die komplexen Moduln von Testproben beziehen, die eine Größe von 4 mm in der Breite, 40 mm in der Länge und 2 mm in der Dicke aufweisen, die aus der Deckkautschukschicht (2Gc) bzw. der Basiskautschukschicht (2Gb) des Reifens herausgeschnitten sind, wie bei einer Temperatur von 70°C, einer Anfangsdehnung von 10%, einer dynamischen Dehnung von ±2% und einer Frequenz von 10 Hz unter Verwendung eines Viskoelastizitätsprüfgeräts gemessen,

und in der Messung die Längsrichtung der Proben eingestellt ist, um der Umfangsrichtung des Reifens zu entsprechen, und die dynamische Dehnung an den Proben in ihrer Längsrichtung angewandt wird.

2. Schwerlastreifen (1) nach Anspruch 1,
wobei der Schwerlastreifen (1) dem folgenden Verhältnis genügt:

$$Tb/Tc \leq 0{,}30.$$

3. Schwerlastreifen (1) nach Anspruch 1,
wobei der Schwerlastreifen (1) dem folgenden Verhältnis genügt:

$$Eb'/Ec' \leq 0{,}50.$$

4. Schwerlastreifen (1) nach einem der Ansprüche 1 bis 3,
wobei der Schwerlastreifen (1) dem folgenden Verhältnis genügt:

$$Bca/(Tb/Tc) \geq 60.$$

5. Schwerlastreifen (1) nach einem der Ansprüche 1 bis 3,
wobei der Schwerlastreifen (1) dem folgenden Verhältnis genügt:

$$Bca/(Tb/Tc) \geq 120.$$

6. Schwerlastreifen nach einem der Ansprüche 1 bis 5,

wobei der Schwerlastreifen (1) dem folgenden Verhältnis genügt:

$$\tan \delta b/\tan \delta c \geq 0{,}50$$

wobei $\tan \delta c$ einen Verlusttangens der Deckkautschukschicht (2Gc) in dem Schulterbereich (Ye) bezeichnet, und $\tan \delta b$ einen Verlusttangens der Basiskautschukschicht (2Gb) in dem Schulterbereich (Ye) bezeichnet, wobei $\tan \delta b$ und $\tan \delta c$ die Verlusttangens sind, welche unter Bedingungen gemessen sind, die eine Temperatur von 70°C, eine Anfangsdehnung von 10%, eine dynamische Dehnung von ±2%, eine Frequenz von 10 Hz und einen Streckmodus umfassen,

und sich $\tan \delta c$ und $\tan \delta b$ zudem auf die Verlusttangens von Testproben beziehen, die eine Größe von 4 mm in der Breite, 40 mm in der Länge und 2 mm in der Dicke aufweisen, die aus der Deckkautschukschicht (2Gc) bzw. der Basiskautschukschicht (2Gb) des Reifens herausgeschnitten sind, wie bei einer Temperatur von 70°C, einer Anfangsdehnung von 10%, einer dynamischen Dehnung von ±2% und einer Frequenz von 10 Hz unter Verwendung eines Viskoelastizitätsprüfgeräts gemessen,

und in der Messung die Längsrichtung der Proben eingestellt ist, um der Umfangsrichtung des Reifens zu entsprechen, und die dynamische Dehnung an den Proben in ihrer Längsrichtung angewandt wird.

7. Schwerlastreifen (1) nach einem der Ansprüche 1 bis 6,
wobei der Schwerlastreifen (1) dem folgenden Verhältnis genügt:

$$Tc \geq 13 \text{ mm.}$$

8. Schwerlastreifen (1) nach einem der Ansprüche 1 bis 7, wobei der Schwerlastreifen (1) dem folgenden Verhältnis genügt:

$$Eb' \leq 5{,}0 \text{ MPa.}$$

9. Schwerlastreifen (1) nach einem der Ansprüche 6 bis 8, wobei der Schwerlastreifen (1) dem folgenden Verhältnis genügt:

$$\tan \delta b \geq 0{,}04.$$

10. Schwerlastreifen (1) nach einem der Ansprüche 1 bis 9, wobei die Deckkautschukschicht (2Gc) in dem Schulterbereich (Ye) einen Polybutadienkautschuk-Gehalt von 20 Massen-% oder mehr, bezogen auf 100 Massen-% des Kautschukkomponenten-Gehalts, aufweist.

**Revendications**

1. Pneu poids lourd (1) comprenant une partie bande de roulement (2), la partie bande de roulement (2) comportant une région d'épaulement (Ye) située axialement vers l'extérieur d'une rainure longitudinale principale (ge) axialement le plus à l'extérieur s'étendant dans une direction circonférentielle,

   la partie bande de roulement (2) étant munie d'un caoutchouc de bande de roulement (2G) constitué d'une structure multicouche comportant une couche de caoutchouc de revêtement (2Gc) formant une surface extérieure de bande de roulement (2S) et une couche de caoutchouc de base (2Gb) radialement le plus à l'intérieur, la couche de caoutchouc de revêtement (2Gc) dans la région d'épaulement (Ye) comprenant au moins un composant en caoutchouc comportant un caoutchouc polybutadiène et un noir de carbone,
   **caractérisé en ce que**
   le pneu poids lourd (1) satisfait les relations suivantes (1) à (3) :

$$(1) \quad Tb/Tc \leq 0{,}50 \; ;$$

$$(2) \quad Eb'/Ec' \leq 0{,}60 \; ;$$

   et

$$(3) \quad Bca/\,(Tb/Tc) \geq 40$$

   dans lequel Tc et Ec' désignent une épaisseur et un module complexe, respectivement de la couche de caoutchouc de revêtement (2Gc) dans la région d'épaulement (Ye) ; Tb et Eb' désignent une épaisseur et un module complexe, respectivement, de la couche de caoutchouc de base (2Gb) dans la région d'épaulement (Ye) ; et Bca désigne une teneur en caoutchouc polybutadiène sur la base de 100 % en masse d'une teneur en composant en caoutchouc dans la couche de caoutchouc de revêtement (2Gc), dans lequel Ec' et Eb' sont les modules complexes mesurés dans des conditions comportant une température de 70 °C, une contrainte initiale de 10 %, une contrainte dynamique de ± 2 %, une fréquence de 10 Hz, et un mode extension, et en outre Ec' et Eb' se rapportent aux modules complexes d'échantillons de test ayant une taille de 4 mm en largeur, 40 mm en longueur et 2 mm en épaisseur découpés de la couche de caoutchouc de revêtement (2Gc) et la couche de caoutchouc de base (2Gb), respectivement, du pneu tel que mesurés à une température de 70 °C, une contrainte initiale de 10 %, une contrainte dynamique de ± 2 %, et une fréquence de 10 Hz en utilisant un dispositif de test viscoélastique, et au cours de la mesure, la direction longitudinale des échantillons est ajustée pour correspondre à la direction circonférentielle du pneu, et la contrainte dynamique est appliquée aux échantillons dans leur direction longitudinale.

**2.** Pneu poids lourd (1) selon la revendication 1,
le pneu poids lourd (1) satisfaisant la relation suivante :

$$Tb/Tc \leq 0,30.$$

**3.** Pneu poids lourd (1) selon la revendication 1 ou la revendication 2,
le pneu poids lourd (1) satisfaisant la relation suivante :

$$Eb'/Ec' \leq 0,50.$$

**4.** Pneu poids lourd (1) selon l'une quelconque des revendications 1 à 3,
le pneu poids lourd (1) satisfaisant la relation suivante :

$$Bca/ (Tb/Tc) \geq 60.$$

**5.** Pneu poids lourd (1) selon l'une quelconque des revendications 1 à 3,
le pneu poids lourd (1) satisfaisant la relation suivante :

$$Bca/ (Tb/Tc) \geq 120.$$

**6.** Pneu poids lourd (1) selon l'une quelconque des revendications 1 à 5, le pneu poids lourd (1) satisfaisant la relation suivante :

$\tan \delta b/\tan \delta c \geq 0,50$
dans lequel $\tan \delta c$ désigne une tangente de perte de la couche de caoutchouc de revêtement (2Gc) dans la région d'épaulement (Ye), et $\tan \delta b$ désigne une tangente de perte de la couche de caoutchouc de base (2Gb) dans la région d'épaulement (Ye),
dans lequel $\tan \delta c$ et $\tan \delta b$ sont les tangentes de perte mesurées dans des conditions comportant une température de 70 °C, une contrainte initiale de 10 %, une contrainte dynamique de $\pm$ 2 %, une fréquence de 10 Hz, et un mode extension,
et en outre $\tan \delta c$ et $\tan \delta b$ se rapportent aux tangentes de perte d'échantillons de test ayant une taille de 4 mm en largeur, 40 mm en longueur et 2 mm en épaisseur découpés dans la couche de caoutchouc de revêtement (2Gc) et la couche de caoutchouc de base (2Gb), respectivement du pneu, tels que mesurés à une température de 70 °C, une contrainte initiale de 10 %, une contrainte dynamique de $\pm$ 2 %, et une fréquence de 10 Hz en utilisant un dispositif de test viscoélastique, et au cours de la mesure, la direction longitudinale des échantillons est ajustée pour correspondre à la direction circonférentielle du pneu, et la contrainte dynamique est appliquée aux échantillons dans leur direction longitudinale.

**7.** Pneu poids lourd (1) selon l'une quelconque des revendications 1 à 6,
le pneu poids lourd (1) satisfaisant la relation suivante :

$$Tc \geq 13 \text{ mm.}$$

**8.** Pneu poids lourd (1) selon l'une quelconque des revendications 1 à 7,
le pneu poids lourd (1) satisfaisant la relation suivante :

$$Eb' \leq 5,0 \text{ MPa.}$$

**9.** Pneu poids lourd (1) selon l'une quelconque des revendications 6 à 8,

le pneu poids lourd (1) satisfaisant la relation suivante : tan $\delta b \geq 0{,}04$.

10. Pneu poids lourd (1) selon l'une quelconque des revendications 1 à 9,
dans lequel la couche de caoutchouc de revêtement (2Gc) dans la région d'épaulement (Ye) a une teneur en caoutchouc polybutadiène de 20 % en masse ou plus sur la base de 100 % en masse de la teneur en composant en caoutchouc.

FIG.1

FIG.2

ge(g)

2S

Ye

P

Tc

Tb

C

2G { 2Gc
     2Gb

13

10

7Be

2Ge

3Ge

X

3G

EP 4 173 842 B1

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3960492 A1
- EP 3785928 A1